# FASCICULE DE BREVET EUROPEEN

(11) **EP 2 926 106 B1**
(45) Date de publication et mention de la délivrance du brevet: **27.07.2022**
(21) Numéro de dépôt: 13810905.3
(22) Date de dépôt: 28.11.2013
(51) Int. Cl.: G01M 3/16, F17D 5/06, G01D 21/00, H04Q 9/00

(54) **MODULE, CIRCUIT ET PROCEDE DE COMMUNICATION POUR DISPOSITIF DE DETECTION ET CAPTEUR COMPRENANT UN TEL MODULE, EN PARTICULIER POUR ATMOSPHERE EXPLOSIVE**
MODUL, SCHALTUNG UND VERFAHREN ZUR KOMMUNIKATION FÜR DETEKTIONSVORRICHTUNG UND SENSOR MIT SOLCH EINEM MODUL, INSBESONDERE FÜR EINE EXPLOSIVE ATMOSPHÄRE
MODULE, CIRCUIT AND METHOD OF COMMUNICATION FOR DETECTION DEVICE AND SENSOR COMPRISING SUCH A MODULE, IN PARTICULAR FOR EXPLOSIVE ATMOSPHERE

(30) Priorité: 28.11.2012 FR 1261349
(43) Date de publication de la demande: 07.10.2015
(73) Titulaire: TTK, 75008 Paris (FR)
(72) Inventeur: BALATCHEV, Stefan, Ottawa, Ontario K1H 5Y6 (CA); GILLOT, Olivier, F-92200 Neuilly sur Seine (FR)
(74) Mandataire: IPAZ
(86) Numéro de dépôt international: PCT/EP2013/074966
(87) Numéro de publication internationale: WO 2014/083104

(56) Documents cités:
- EP-A1- 2 330 397
- DE-A1- 19 959 710
- FR-A1- 2 761 154
- US-A- 4 339 723
- US-A- 4 807 149
- US-A1- 2012 032 811

## Description

L'invention concerne un module de communication avec un capteur d'un dispositif de détection comprenant une pluralité de capteurs disposés en série. Elle concerne également un circuit de communication comprenant de tels modules de communication, un capteur comprenant un tel module de communication. Elle concerne en outre un dispositif de détection comprenant de tels capteurs ou circuit de communication et un procédé de communication mis en œuvre dans un tel dispositif.

Le domaine de l'invention est le domaine des dispositifs de détection comprenant une pluralité de capteurs agencés pour détecter/mesurer un événement ou une grandeur physique, et plus particulièrement des dispositifs de détection de fuite, par exemple de liquides de type eau ou hydrocarbures etc., en particulier dans des zones à atmosphère dangereuse voire explosive, connues sous le nom de « zones ATEX (pour ATmosphère EXplosive).

### Etat de la technique

Il existe actuellement de nombreuses solutions de détection de fuite de liquides telles que des fuites d'eau ou d'hydrocarbures. Ces solutions mettent en œuvre un appareil électronique et/ou informatique de supervision relié, par l'intermédiaire d'un câble, dit de détection, à un ou plusieurs capteurs disposés le long de ce câble. Le câble de détection transporte, par l'intermédiaire de deux fils, un signal électrique d'alimentation des différents capteurs, fourni par un module d'alimentation qui peut être intégré à l'appareil de supervision. Le câble de détection transporte également, par l'intermédiaire d'un ou plusieurs fils, un signal de communication entre l'appareil de supervision et chacun des capteurs.

Plus le câble de détection est long, plus le signal électrique de communication émis par l'appareil de supervision, est puissant pour garantir une bonne communication avec tous les capteurs, y compris le capteur se trouvant le plus loin et s'affranchir des énergies parasites et des réactances parasites.

Or, l'augmentation de la puissance du signal de communication est dangereuse pour des zones ATEX car des signaux de puissances élevées peuvent causer des explosions dues à l'énergie dégagée par effet de joule. C'est pourquoi, la puissance des signaux utilisés est limitée pour les zones ATEX et surveillée par des dispositifs barrières appelés « Barrière Zener » positionnés entre l'appareil électronique de supervision et le câble de détection. La limitation de la puissance des signaux de communication a pour conséquence de limiter la longueur du câble de détection.

L'invention a pour but de pallier les inconvénients précités.

Un autre but de l'invention est de proposer un procédé et des moyens de communication avec des capteurs d'un dispositif de détection, et en particulier de détection de fuite, dans des zones à atmosphère dangereuse, sans pour autant limiter la longueur des dispositifs de détection.

Il est aussi un but de l'invention de proposer un procédé et des moyens de communication avec des capteurs d'un dispositif de détection, et en particulier de détection de fuite, limitant l'énergie consommée lors des opérations de communication avec les capteurs.

Enfin un autre but de l'invention est de proposer un procédé et des moyens de communication avec des capteurs d'un dispositif de détection, et en particulier de détection de fuite, limitant l'énergie dégagée par le dispositif de détection.

### Exposé de l'Invention

L'invention permet d'atteindre les buts précités par l'objet des revendications ci-après.

En particulier, l'invention propose un module de communication pour un capteur, prévu pour être utilisé dans un dispositif de détection, en particulier de détection de fuite, comprenant une pluralité de capteurs, caractérisé en ce qu'il comprend :
- au moins un moyen, dit amont, pour recevoir un signal d'interrogation depuis l'amont dudit capteur et le transporter vers le capteur, et recevoir dudit capteur un signal de réponse et le transporter vers l'amont du capteur ;
- au moins un moyen, dit aval, pour transporter un signal d'interrogation vers l'aval dudit capteur,
- au moins un moyen, dit de court-circuit du capteur, déplaçable entre une position ouverte dans laquelle le moyen amont est relié au capteur, et une position fermée dans laquelle le moyen amont est déconnecté du capteur et connecté au moyen aval,
- au moins un moyen, dit de commande, pour commander ledit moyen de court-circuit et agencé au sein du module de communication.

Selon un aspect de l'invention, ce moyen de commande est configuré pour détecter le signal de réponse émis par le capteur et modifier la position dudit moyen de court-circuit en conséquence, et pour :
▪ maintenir ledit moyen de court-circuit en position ouverte jusqu'à l'émission du signal de réponse, permettant ainsi :
   - dans un premier sens de communication, de recevoir (102) le signal d'interrogation par ledit moyen amont (102) et de transmettre ledit signal d'interrogation au capteur par ledit port de communication (104), et
   - dans le sens contraire, d'émettre par le moyen amont (102) un signal de réponse fourni par le capteur par ledit port de communication (104) en réponse audit signal d'interrogation; et
▪ disposer ledit moyen de court-circuit en position fermée après ladite émission.

Selon un autre aspect de l'invention, ce moyen de commande configuré pour détecter le signal d'interrogation, et pour:
▪ - dès réception du signal d'interrogation, décompter un premier compte à rebours par un minuteur, d'une durée supérieure ou égale à la réponse du capteur, et ainsi maintenir ledit moyen de court-circuit (110) en position ouverte jusqu'à l'émission du signal de réponse, permettant ainsi :
   - dans un premier sens de communication, de recevoir (102) le signal d'interrogation par ledit moyen amont (102) et de transmettre ledit signal d'interrogation au capteur par ledit port de communication (104), et
   - dans le sens contraire, d'émettre par le moyen amont (102) un signal de réponse fourni par le capteur par ledit port de communication (104) en réponse audit signal d'interrogation ;
▪ - dès que le premier compte à rebours est terminé, disposer ledit moyen de court-circuit (100) en position fermée après ladite émission, et décompter un deuxième compte-à-rebours d'une durée supérieure ou égale à la durée de réponse de l'ensemble des capteurs disposé en aval du module de communication ; et
▪ dès que le deuxième compte-à-rebours est terminé, ledit moyen de court-circuit (110) est disposé à nouveau en position ouverte.

Ainsi, le module de communication selon l'invention permet de réaliser une communication avec un capteur pour l'interroger sur son état ou sur une grandeur mesurée et le déconnecter du ou des fils de communication après la communication. Le capteur ainsi déconnecté est alors dans un état de veille dans lequel il ne traite plus aucun signal de communication puisqu'il est déconnecté du ou des fils de communication. Un tel capteur en état de veille consomme très peu d'énergie et par conséquent dégage très peu d'énergie par effet de joule.

Un tel module de communication selon l'invention, permet, dans le cadre d'un dispositif de détection comprenant une pluralité de capteurs, disposés en série sur un ou plusieurs fils de communication, de communiquer avec chacun des modules individuellement et à tour de rôle et d'avoir à un temps t donné un seul et unique capteur actif, les autres capteurs étant mis en veille et déconnectés du fil de communication. Le fait d'avoir un seul et unique capteur actif à un temps donné permet de limiter l'énergie dégagée par effet de joule lors des opérations de communications dans le cadre d'un dispositif de détection comprenant plusieurs capteurs comparé à une configuration dans laquelle tous les capteurs traitent un signal de communication pour déterminer s'ils sont concernés ou non par le signal de communication.

Le module selon l'invention permet, lors des opérations de communications, donc de diminuer l'énergie consommée par les capteurs d'un dispositif de détection et par conséquent l'énergie dégagée par effet de joule par les capteurs. Cette diminution d'énergie permet de concevoir des dispositifs de détection plus longs, et couvrant une plus grande distance de détection, et également comprenant plus de capteurs.

Un tel module de communication est particulièrement adapté à une utilisation dans les zones classées ATEX, pour communiquer avec les capteurs d'un dispositif de détection, sans avoir à limiter la longueur ni le nombre de capteurs d'un dispositif de détection.

Dans des domaines non concernés par les contraintes ATEX et pour des capteurs de type différent, il a été proposé de raccorder en série plusieurs capteurs adressables. Par exemple, le document DE 19959710 A1 décrit un système dans lequel un fil dessert de tels capteurs et leur distribue un signal d'horloge, et un autre fil les dessert pour recevoir leur signal de réponse.

Par rapport à ce document, on peut noter que l'invention propose d'utiliser pour chaque capteur d'utiliser le même fil à la fois pour recevoir le signal d'interrogation et le transmettre au capteur suivant vers l'aval, et à la fois pour émettre le signal de réponse et transmettre un signal de réponse reçu du capteur suivant situé en aval.

Bien que représentant des contraintes dans l'ordonnancement des signaux et nécessitant une électronique plus complexe, cette différence permet de diminuer le nombre de canaux parcourant le bus, et donc le nombre de canaux à protéger vis-à-vis des nécessités ATEX.

Dans une version particulièrement avantageuse de l'invention, le module de communication selon l'invention peut en outre comprendre au moins un moyen, dit moyen répéteur, pour recevoir le signal d'interrogation reçu sur le moyen amont, et le réémettre sur le moyen aval.

Le module répéteur peut éventuellement mémoriser le signal d'interrogation à réémettre.

Dans cette version, le module de communication permet de diminuer encore plus l'énergie consommée, et par conséquent l'énergie dégagée par effet de joule, par un dispositif de détection comprenant une pluralité de capteurs. En effet, le module de communication permet de réémettre un signal d'interrogation de manière progressive, d'un capteur à un autre capteur adjacent, et ce jusqu'au dernier capteur sans avoir à réémettre le signal d'interrogation depuis une unité de communication distante. Ainsi, le niveau d'énergie du signal d'interrogation peut être diminué et calculé en fonction de la plus grande distance séparant deux capteurs adjacents.

Le module selon l'invention peut avantageusement comprendre au moins un moyen d'amplification d'un signal d'interrogation reçu sur le moyen amont.

Ainsi, lorsque le signal d'interrogation reçu est trop faible, l'amplification permet de transmettre un signal d'interrogation suffisamment clair au capteur pour qu'il puisse le comprendre et le traiter sans avoir à demander à recevoir le signal d'interrogation une nouvelle fois. Une telle amplification permet de s'affranchir des aléas pouvant affaiblir le signal d'interrogation.

Par ailleurs, lorsque le module de communication comprend un moyen répéteur tel que décrit plus haut, l'amplification du signal d'interrogation est réalisée avant la réémission de ce signal d'interrogation sur le moyen aval. Ainsi, le module de communication selon l'invention permet de s'assurer que le signal d'interrogation reçu par un module de communication suivant ou un capteur suivant est suffisamment clair. Dans ce cas, le niveau d'amplification peut être fonction de la distance que le signal d'interrogation réémis doit parcourir pour atteindre un module de communication suivant ou un capteur suivant à destination duquel le signal d'interrogation est réémis.

Lorsque le module de communication comprend un moyen répéteur tel que décrit plus haut, le moyen d'amplification peut être intégré au moyen répéteur ou avec le moyen répéteur dans un unique module.

Le minuteur peut en outre être agencé pour :
- maintenir le moyen de court-circuit en position fermée pendant une durée prédéterminée supérieure ou égale à l'interrogation de l'ensemble des capteurs disposés en aval,
- ensuite repositionner le moyen de court-circuit en position ouverte, et
- attendre la réception d'un nouveau signal d'interrogation.

Dans une version de réalisation préférée le module de communication selon l'invention peut être réalisé de manière intégrée dans un processeur ou un microcontrôleur.

Suivant un autre aspect de l'invention, il est proposé un circuit de communication avec une pluralité de capteurs, notamment avec les capteurs d'un dispositif de détection, en particulier de détection de fuite, ledit circuit de communication comprenant :
- un module de communication selon l'invention pour chaque capteur de ladite pluralité de capteurs, et
- au moins un fil, dit de communication, prévu pour relier en série lesdits modules de communication.

Un tel circuit de communication selon l'invention permet l'interrogation à tour de rôle de chacun des capteurs, en consommant et en dégageant moins d'énergie que les circuits de communication actuels avec les capteurs d'un dispositif de détection.

Un tel circuit de communication réalise un bus de communication à faible énergie, adapté à une utilisation dans les zones classées ATEX sans avoir à limiter la longueur ni le nombre de capteurs d'un dispositif de détection.

Le circuit de communication selon l'invention peut en outre comprendre au moins un moyen de terminaison, par exemple une résistance égale à la résistance d'un capteur, relié au fil de communication en aval du dernier capteur.

Un tel moyen de terminaison permet de terminer un processus d'interrogation des capteurs, de manière simple et peu coûteuse.

Suivant un autre aspect de l'invention, il est proposé un capteur pour détecter un événement, tel qu'une fuite, ou pour mesurer une grandeur physique comprenant :
- au moins un moyen senseur pour capter un événement ou une grandeur physique, et
- un module de communication avec un capteur selon l'invention.

Le capteur selon l'invention permet de réaliser une communication avec une unité de communication en consommant moins d'énergie et en dissipant moins d'énergie comparé aux capteurs actuels.

Le capteur selon l'invention peut en outre comprendre au moins un module électronique de gestion dudit au moins un moyen senseur, par exemple un module électronique réalisant une interface avec le moyen senseur lors d'une opération d'interrogation de l'état du capteur. Dans ce cas, le module de communication peut être intégré dans le module de gestion.

Dans un exemple de réalisation, le moyen senseur peut être agencé dans/autour d'un câble, dit de détection, ledit câble de détection comprenant en outre au moins deux fils d'alimentation du capteur, s'étendant sur toute la longueur du câble de détection.

Dans le cas de la détection de fuites, le capteur peut comprendre un câble de détection. Le moyen senseur est un ou plusieurs fils conducteurs utilisés pour mesurer une impédance qui varie en fonction de l'existence ou non d'une fuite. Dans ce cas, le ou les fils de détection sont disposés dans/autour du câble de détection et sensiblement sur toute la longueur du câble de détection.

Dans une version préférée, le câble de détection peut en outre comprendre à une de ses extrémités le module électronique de gestion et à l'autre de ses extrémités un module, dit de continuité, ledit module électronique de gestion, respectivement ledit module de continuité, étant prévu pour s'assembler, avantageusement de manière démontable, avec un module électronique de continuité, respectivement un module de gestion, d'un autre capteur, en particulier d'un capteur identique, de sorte à réaliser :
- une connexion en série entre l'au moins un fil de communication dudit capteur et au moins un fil de communication dudit autre capteur, et
- une connexion, en série ou en parallèle, entre les fils d'alimentation dudit capteur et les fils d'alimentation dudit autre capteur.

Ainsi, il est possible de modifier à souhait la distance de détection et donc la longueur du dispositif de détection, en assemblant de manière démontable plusieurs capteurs de fuite jusqu'à obtenir la longueur souhaitée.

Suivant un autre aspect de l'invention, il est proposé un dispositif de détection, en particulier de détection de fuite, comprenant :
- une pluralité de capteurs selon l'invention reliés entre eux, en série, par au moins un fil de communication, ou
- une pluralité de capteurs et un circuit de communication selon l'invention reliant en série lesdits capteurs.

Le dispositif selon l'invention comprend en outre une unité de communication pour interroger les capteurs du dispositif de détection, et une unité d'alimentation pour alimenter en série ou en parallèle chacun des capteurs du dispositif de détection ainsi que les modules ou le circuit de communication.

Si les capteurs ne comprennent pas de fil(s) de communication, respectivement de fils d'alimentation, dans ce cas le système comprend en outre ce(s) fil(s) connecté(s) à l'unité de communication, respectivement à l'unité d'alimentation.

Avantageusement, le dispositif selon l'invention peut en outre comprendre un dispositif, dit barrière, de limitation de la puissance/énergie électrique émise en direction des capteurs et disposé entre lesdites unités d'alimentation et de communication, et lesdits capteurs.

Un tel dispositif barrière peut être une Barrière Zener bien connue.

Suivant encore un autre aspect de l'invention, il est proposé un procédé de communication entre une unité de communication et des capteurs, ladite unité de communication et lesdits capteurs étant disposés en série, ledit procédé comprenant une étape d'émission d'un signal, dit d'interrogation, de ladite unité de communication vers le capteur, dit premier capteur, le plus proche de ladite unité de communication, et une itération d'une phase, dite d'interrogation, réalisée par chaque capteur à tour de rôle, en commençant par le premier capteur et comprenant les étapes suivantes :
- émission, vers l'unité de communication, d'un signal de réponse audit signal d'interrogation,
- mise en court-circuit dudit capteur de sorte que l'unité de communication est reliée au prochain capteur sans passer par ledit capteur.

La phase de communication peut en outre comprendre une étape de réémission, par le capteur, dudit signal d'interrogation vers le capteur suivant, chacun des capteurs à part le premier capteur recevant ainsi le signal d'interrogation du capteur précédent. Une telle réémission du signal d'interrogation par chaque capteur au capteur suivant permet de réduire le niveau de puissance du signal d'interrogation comparé au cas où le signal d'interrogation est émis par l'unité de communication pour chaque capteur.

La phase d'interrogation peut en outre comprendre une étape de mémorisation du signal d'interrogation reçu par le capteur avant l'étape de réémission.

La mise en court-circuit d'un capteur peut être réalisée pour un temps prédéterminé supérieur ou égal à la durée d'interrogation de tous les capteurs. Le capteur peut ensuite être reconnecté au fil de communication pour réaliser ou être prêt à réaliser une nouvelle phase de communication.

La phase de communication peut en outre comprendre une amplification du signal d'interrogation reçu. Lorsque la phase de communication comprend une mémorisation du signal d'interrogation l'amplification peut être réalisée après mémorisation du signal, juste avant ou lors de la réémission du signal d'interrogation.

Le procédé selon l'invention est particulièrement bien adapté pour communiquer avec des capteurs de détection de fuite de liquide dans les zones à atmosphère explosive car il permet de diminuer la puissance/l'énergie électrique utilisée/dissipée par les capteurs de détection de fuite.

D'autres avantages et caractéristiques apparaîtront à l'examen de la description détaillée de trois exemples nullement limitatifs, et des dessins annexés sur lesquels :
- la FIGURE 1 est une représentation schématique d'un module de communication selon l'invention ;
- la FIGURE 2 est une représentation schématique d'un capteur, en particulier d'un capteur de détection de fuite, selon l'invention comprenant le module de communication de la FIGURE 1 ;
- la FIGURE 3 est une représentation schématique d'un dispositif de détection, en particulier de détection de fuite, selon l'invention comprenant une pluralité de capteurs de la FIGURE 2 ;
- la FIGURE 4 est une représentation schématique d'un procédé de communication avec les capteurs d'un dispositif de détection selon l'invention ; et
- la FIGURE 5 est une représentation schématique des signaux échangés lors du procédé de la FIGURE 4 dans la configuration du dispositif de la FIGURE 3.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

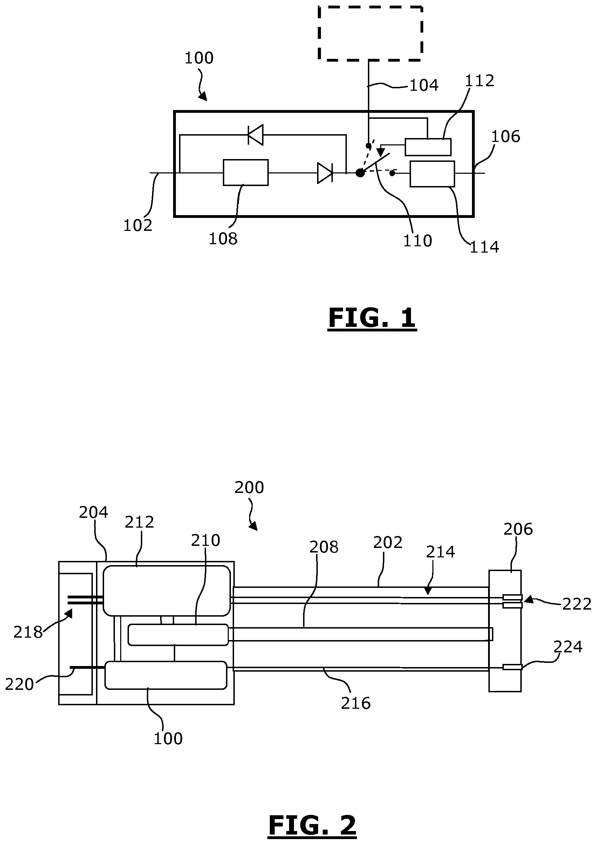

La FIGURE 1 est une représentation schématique d'un module de communication selon l'invention.

Le module de communication 100 représenté sur la figure 1 comprend un port 102, dit amont, pour recevoir un signal d'interrogation, un port 104 pour transmettre le signal d'interrogation à un capteur, représenté par le rectangle en pointillé sur la FIGURE 1. De plus, le signal de réponse fourni par le capteur est transmis par le port 104 au port amont. Ainsi, les ports 102 et 104 permettent à la fois de recevoir le signal d'interrogation dans un premier sens de communication (du port 102 vers le port 104) et d'émettre un signal de réponse dans le sens contraire (du port 104 vers le port 102)

Le module de communication 100 comprend en outre un port 106, dit aval, pour émettre un signal vers l'aval du module de communication 100, par exemple à destination d'un capteur disposé en aval du module de communication et en série sur un fil de communication.

Le module de communication 100 comprend en outre un moyen 108, dit répéteur, disposé sur le port amont 102 pour recevoir un signal d'interrogation depuis l'amont du module de communication, éventuellement le mémoriser, et le réémettre vers l'aval du module de communication 100, à savoir vers le port aval 106.

Le module 100 comprend en outre un interrupteur 110 qui permet de relier le port amont 102 soit au port 104 de communication, dans une position, dite ouverte, soit au port aval 106 dans une position, dite fermée. Dans cette position fermée dans laquelle le port amont 102 est relié au port aval 106, le port de communication 104 est court-circuité, c'est-à-dire qu'il n'est pas relié au reste du module de communication 100 et est déconnecté du reste du module de communication 100.

Le module de communication 100 comprend en outre un moyen 112 de commande de la position de l'interrupteur 110 pour le disposer soit dans la position ouverte, soit dans la position fermée. Le moyen de commande 112 comprend, dans le présent exemple, un ou plusieurs minuteurs. Dès réception du signal d'interrogation un minuteur permet de décompter un premier compte-à-rebours, d'une durée supérieure ou égale à la durée de réponse du capteur. Dès que le premier compte-à-rebours est terminé, l'interrupteur 110 est disposé en position fermée, et un deuxième compte-à-rebours est décompté par le minuteur d'une durée supérieure ou égale à la durée de réponse de l'ensemble des capteurs disposé en aval du module de communication 100. Dès que le deuxième compte-à-rebours est terminé, l'interrupteur 110 est disposé à nouveau en position ouverte.

Alternativement, le moyen de commande peut être agencé pour détecter le signal de réponse émis par le capteur et modifier la position de l'interrupteur en conséquence.

Dans l'exemple représenté en figure 1, le moyen de commande 112 est relié au port de communication 104 avec le capteur. Alternativement, le moyen de commande 112 peut être relié au port amont 102 ou au port aval 106.

Dans l'exemple représenté sur la figure 1, le moyen répéteur 108 réémet le signal d'interrogation dès que l'interrupteur 110 passe en position fermée.

Optionnellement, le module de communication 100 peut en outre comprendre un amplificateur 114 pour amplifier le signal d'interrogation. Dans l'exemple représenté sur la figure 1, le moyen amplificateur 114 est disposé sur le port aval 106 en aval de l'interrupteur 110.

Dans une version de réalisation préférée le module de communication 100 peut être réalisé de manière intégrée dans un processeur ou un microcontrôleur.

La FIGURE 2 est une représentation schématique d'un capteur, en particulier d'un capteur de détection selon l'invention, et plus particulièrement un capteur de détection de fuite de liquide tel que de l'eau ou un hydrocarbure, comprenant le module de communication 100 de la FIGURE 1.

Le capteur 200 de la figure 2 comprend un câble de détection 202 comportant à une extrémité, dite amont, un connecteur 204, dit amont, et à l'autre extrémité, dite aval, un connecteur 206, dit aval.

Le capteur 200 comprend également un moyen senseur 208 agencé dans/autour du câble 202 et qui dans le cas de la détection de fuite de liquide comprend un ou plusieurs fils de détection de fuite de liquide.

Le capteur 200 comprend en outre un module électronique 210 de gestion ou d'interrogation du moyen senseur 208 relié au module de communication 100 et agencés tous deux dans le connecteur amont 204.

Par exemple, dans le cas de la détection de fuite de liquide conducteur électriquement, le moyen senseur 208 peut comprendre deux fils conducteurs électriquement, isolés entre eux, et le module de gestion 210 peut comprendre un ohmmètre pour mesurer la résistance entre ces deux fils. Lorsque la résistance mesurée est supérieure à une valeur prédéterminée, alors aucune fuite n'est détectée, sinon une fuite est détectée. L'ampleur de la fuite peut également être déterminée en fonction de la valeur de résistance mesurée : plus la résistance mesurée est faible plus la fuite importante. Bien entendu, cette architecture est uniquement donnée à titre d'exemple et n'est en aucun limitative.

Le module de gestion 210 reçoit, de la part du module de communication 100, le signal d'interrogation puis interroge le moyen senseur 208 ou réalise une ou des mesures de grandeurs physiques ou électriques par le biais du moyen senseur 208 et détermine le signal de réponse. Ensuite, le signal de réponse est transmis au module de communication 100.

Le capteur 200 comprend en outre un module d'alimentation 212 agencé dans le connecteur amont 204. Le module d'alimentation 212 reçoit un signal d'alimentation électrique et alimente le module de gestion 210 et le module de communication 100.

Le moyen senseur 208 est agencé dans/autour du câble 202 sensiblement sur toute la longueur du câble 202. Par exemple, le moyen senseur 208 peut être spiralé autour de l'âme centrale du câble de détection.

Le connecteur amont 204, respectivement le connecteur aval 206, est prévu pour se connecter, de manière démontable ou non, de préférence de manière démontable, avec un connecteur aval 206, respectivement avec un connecteur amont 204, d'un autre capteur de sorte à réaliser un dispositif de détection de longueur variable et modulaire.

Le capteur 200 comprend en outre deux fils d'alimentation notés 214, agencés dans/autour du câble de détection 202, et transportant un signal d'alimentation entre les connecteurs amont et aval 204, 206.

Le capteur 200 comprend en outre un fil de communication 216, agencé dans/autour du câble de détection 202, et transportant un signal de communication entre les connecteurs amont et aval 204, 206.

Le connecteur amont 204 comprend :
- deux ports de connexion 218, par exemple mâle, reliés au module d'alimentation et prévus pour recevoir/transmettre un signal d'alimentation électrique ; et
- un port de connexion 220, par exemple mâle, reliés au module de communication et prévus pour recevoir ou transmettre un signal de communication.

Le connecteur aval 206 comprend :
- deux ports de connexion 222, par exemple femelle, reliés aux fils d'alimentation 214 et prévus pour recevoir/transmettre un signal d'alimentation électrique ; et
- un port de connexion 224, par exemple femelle, reliés au module de communication et prévus pour recevoir ou transmettre un signal de communication.

Le connecteur amont 204, respectivement le connecteur aval 206, est conçu pour se connecter sur un connecteur aval 206, respectivement un amont 204, d'un autre capteur de sorte à réaliser :
- une connexion électrique transportant un signal d'alimentation par l'intermédiaire des ports 218, respectivement 222, et
- une connexion électrique transportant un signal de communication par l'intermédiaire du port 220, respectivement 224.

Ainsi, il est possible avec le capteur 200 de réaliser un dispositif de détection de fuite, modulaire, de longueur variable à souhait simplement en connectant ou en déconnectant les capteurs et sans avoir à gérer en plus des connexions additionnelles pour l'alimentation des capteurs ou la communication avec les capteurs. La simple connexion d'un capteur avec un autre par l'intermédiaire des connecteurs amont et aval permet de transporter le signal d'alimentation et le signal de communication.

Le connecteur amont 204, respectivement aval 206, peut également comprendre des moyens (non représentés) de guidage et de maintien d'un connecteur aval 206, respectivement amont 204, pour faciliter l'assemblage des connecteurs entre eux et pour s'assurer que la connexion est maintenue après assemblage. De tels moyens peuvent comprendre un filetage, un taraudage, des clips, un rail de guidage etc.

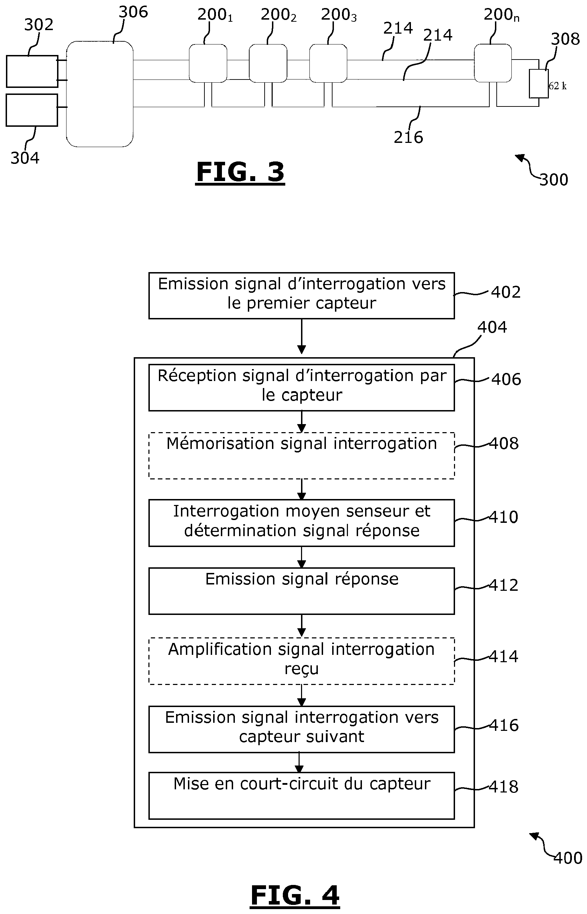

La FIGURE 3 est une représentation schématique d'un dispositif de détection, en particulier de détection de fuite, selon l'invention comprenant une pluralité de capteurs de la FIGURE 2.

Le dispositif 300 comprend une unité d'alimentation 302 et une unité de communication 304 et n capteurs 200₁, 200₂, 200₃, ..., 200ₙ tel que le capteur 200 décrit en FIGURE 2. L'unité d'alimentation alimente chacun des capteurs 200 par un signal d'alimentation transporté de capteur en capteur par les fils 214 et l'unité de communication communique avec chacun des capteurs 200 à tour de rôle par l'intermédiaire du fil de communication 216.

Pour faciliter la compréhension de la connexion entre les capteurs 200, les fils d'alimentation 214 et le fil de communication 216 ont été représentés de manière distincte à l'extérieur des capteurs 200.

En ce qui concerne le fil de communication 216, les capteurs 200ᵢ sont connectés en série sur le fil de communication 216. En ce qui concerne l'alimentation les capteurs 200 peuvent être connectés en série ou en parallèle sur les fils d'alimentation 214.

Le dispositif de détection de fuite 300 comprend également une barrière Zener 306 disposée entre d'une part les capteurs 200 et d'autre part l'unité d'alimentation 302 et l'unité de communication 304. Cette barrière Zener 306 permet de limiter la puissance ou l'énergie transmise des unités d'alimentation et de communication vers les capteurs 200.

Le dispositif 300 comprend en outre un moyen 308 de terminaison connecté au dernier capteur 200ₙ, qui dans le présent exemple est une résistance, par exemple de valeur 62kΩ. Le moyen de terminaison 308 est connecté d'une part au connecteur aval du dernier capteur 200ₙ et d'autre part à un des fils d'alimentation pour assurer une terminaison correcte d'un processus de communication.

La FIGURE 4 est une représentation schématique d'un procédé de communication avec les capteurs d'un dispositif de détection selon l'invention, par exemple le dispositif 300 de la FIGURE 3.

Le procédé 400 comprend une étape 402 d'émission d'un signal d'interrogation depuis une unité de communication, l'unité 304 dans l'exemple de la FIGURE 3, vers le premier capteur se trouvant sur le fil de communication, le capteur 200₁ dans l'exemple de la FIGURE 3.

Le procédé 400 comprend ensuite une phase 404, dite d'interrogation, réalisée par chacun des capteurs les uns après les autres, à tour de rôle, en commençant par le premier capteur, le capteur 200₁ dans l'exemple de la FIGURE3.

Cette phase d'interrogation 404 comprend une étape 406 de réception d'un signal d'interrogation par le capteur, par exemple le capteur 200ᵢ avec i=1 à n, depuis l'amont du capteur par l'intermédiaire d'un fil de communication, par exemple le fil de communication 216.

Lors d'une étape 408 optionnelle, le signal d'interrogation est mémorisé dans des moyens de mémorisation au niveau du capteur.

Puis, le moyen senseur est interrogé conformément au signal d'interrogation pour déterminer un signal de réponse à l'étape 410.

Le signal de réponse est émis vers l'amont du capteur à l'étape 412, c'est-à-dire vers l'unité de commande, sur le même fil de communication ou sur un autre fil de communication, en tout cas dans le sens contraire au sens de propagation du signal d'interrogation.

Lors d'une étape optionnelle 414, le signal d'interrogation préalablement reçu est amplifié au niveau du capteur.

A l'étape 416, le signal d'interrogation, éventuellement amplifié est émis par le capteur vers le capteur suivant, par exemple le capteur 200ᵢ₊₁, c'est-à-dire le capteur se trouvant en aval du capteur par rapport à l'unité de communication, sur le même fil de communication.

A l'étape 418, le capteur est mis en court-circuit par rapport au fil de communication, c'est-à-dire qu'il est déconnecté du fil de communication. En fonction de l'architecture choisie pour le module de communication, ou pour le capteur, cette étape 418 peut être réalisée avant l'étape 416.

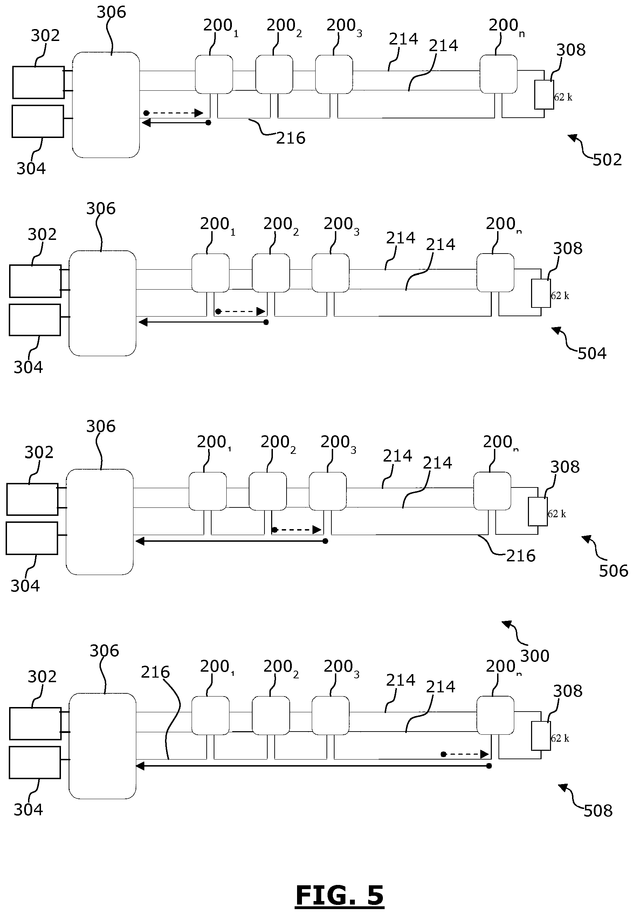

La FIGURE 5 est une représentation schématique des signaux échangés lors du procédé de la FIGURE 4 dans la configuration du dispositif de la FIGURE 3.

Sur la FIGURE 5, une flèche en pointillés symbolise un signal d'interrogation et une flèche en trait plein symbolise un signal de réponse. Chaque flèche montre le point de départ du signal, le point d'arrivée et le sens de propagation du signal en question.

Pour chaque capteur 200ᵢ, le signal d'interrogation et le signal de réponse se propagent dans deux sens opposés sur un même fil de communication : le signal de réponse se propage dans le sens capteur 200ᵢ vers l'unité de communication 304 et le signal d'interrogation se propage dans le sens contraire.

La configuration 502 représente le cas où le premier capteur 200₁ reçoit le signal d'interrogation depuis l'unité de communication 304 et répond à l'unité de communication 304.

La configuration 504 représente le cas où le deuxième capteur 200₂ reçoit le signal d'interrogation depuis le premier capteur 200₁ et répond à l'unité de communication 304.

La configuration 506 représente le cas où le troisième capteur 200₃ reçoit le signal d'interrogation depuis le deuxième capteur 200₂ et répond à l'unité de communication 304.

La configuration 508 représente le cas où le capteur 200ₙ de rang n reçoit le signal d'interrogation depuis le (n-1)ième capteur 200ₙ₋₁ et répond à l'unité de communication 304.

De manière générale :
- chaque capteur 200ᵢ, avec i=2 à n, reçoit le signal d'interrogation du capteur précédent 200ᵢ₋₁, et
- chaque capteur 200ᵢ, avec i=1 à n-1, envoie le signal d'interrogation au capteur suivant 200ᵢ₊₁ ; et
chaque capteur répond à l'unité de communication.

Le signal de réponse et/ou le signal d'interrogation peut être un signal analogique ou un signal numérique.

Par exemple, le signal d'interrogation peut être une impulsion de niveau constant et dont la largeur ou le nombre diffère en fonction de l'information demandée au capteur.

Le signal de réponse peut être un signal numérique, par exemple un message sur 12 bits dont :
- les deux premiers bits signalent le début du message,
- le dernier bit signale la fin du message, et
- les neuf autres bits représentent le contenu du message.

Bien entendu l'invention n'est pas limitée aux exemples qui viennent d'être décrits.

## Revendications

1. Module (100) de communication pour un capteur (200), prévu pour être utilisé dans un dispositif (300) de détection, en particulier de détection de fuite en atmosphère explosive, comprenant une pluralité de capteurs (200), **caractérisé en ce qu'**il comprend:
- au moins un moyen (102), dit amont, pour recevoir un signal d'interrogation depuis l'amont dudit capteur et le transporter vers le capteur par un port de communication (104), et pour recevoir dudit capteur par ledit port de communication (104) un signal de réponse et le transporter vers l'amont du capteur par ledit moyen amont (102);
- au moins un moyen (106), dit aval, pour transporter un signal d'interrogation vers l'aval dudit capteur,
- au moins un moyen (110), dit de court-circuit du capteur, déplaçable entre une position ouverte dans laquelle le moyen amont (102) est relié audit port de communication (104), et une position fermée dans laquelle le moyen amont (102) est déconnecté dudit port de communication (104) avec le capteur et est connecté au moyen aval (106),
- au moins un moyen (112), dit de commande, pour commander ledit moyen de court-circuit (110) et
agencé au sein du module de communication (100);
configuré pour détecter le signal de réponse émis par le capteur et modifier la position dudit moyen de court-circuit (110) en conséquence, pour:
- maintenir ledit moyen de court-circuit (110) en position ouverte jusqu'à l'émission du signal de réponse, permettant ainsi :
- dans un premier sens de communication, de recevoir (102) le signal d'interrogation par ledit moyen amont (102) et de transmettre ledit signal d'interrogation au capteur par ledit port de communication (104), et
- dans le sens contraire, d'émettre par le moyen amont (102) un signal de réponse fourni par le capteur par ledit port de communication (104) en réponse audit signal d'interrogation; et
- disposer ledit moyen de court-circuit (100) en position fermée après ladite émission.

2. Module (100) de communication pour un capteur (200), prévu pour être utilisé dans un dispositif (300) de détection, en particulier de détection de fuite en atmosphère explosive, comprenant une pluralité de capteurs (200), **caractérisé en ce qu'**il comprend:
- au moins un moyen (102), dit amont, pour recevoir un signal d'interrogation depuis l'amont dudit capteur et le transporter vers le capteur par un port de communication (104), et pour recevoir dudit capteur par ledit port de communication (104) un signal de réponse et le transporter vers l'amont du capteur par ledit moyen amont (102) ;
- au moins un moyen (106), dit aval, pour transporter un signal d'interrogation vers l'aval dudit capteur,
- au moins un moyen (110), dit de court-circuit du capteur, déplaçable entre une position ouverte dans laquelle le moyen amont (102) est relié audit port de communication (104), et une position fermée dans laquelle le moyen amont (102) est déconnecté dudit port de communication (104) avec le capteur et est connecté au moyen aval (106),
- au moins un moyen (112), dit de commande, pour commander ledit moyen de court-circuit (110) et
agencé au sein du module de communication (100);
configuré pour détecter le signal d'interrogation, et pour:
- dès réception du signal d'interrogation, décompter un premier compte à rebours par un minuteur, d'une durée supérieure ou égale à la réponse du capteur, et ainsi maintenir ledit moyen de court-circuit (110) en position ouverte jusqu'à l'émission du signal de réponse, permettant ainsi :
- dans un premier sens de communication, de recevoir (102) le signal d'interrogation par ledit moyen amont (102) et de transmettre ledit signal d'interrogation au capteur par ledit port de communication (104), et
- dans le sens contraire, d'émettre par le moyen amont (102) un signal de réponse fourni par le capteur par ledit port de communication (104) en réponse audit signal d'interrogation ;
- dès que le premier compte à rebours est terminé, disposer ledit moyen de court-circuit (100) en position fermée après ladite émission, et décompter un deuxième compte-à-rebours d'une durée supérieure ou égale à la durée de réponse de l'ensemble des capteurs disposé en aval du module de communication ; et
dès que le deuxième compte-à-rebours est terminé, ledit moyen de court-circuit (110) est disposé à nouveau en position ouverte.

3. Module (100) selon la revendication 1 ou 2, **caractérisé en ce qu'**il comprend en outre au moins un moyen (108), dit moyen répéteur, pour recevoir le signal d'interrogation reçu sur le moyen amont (102) et le réémettre sur le moyen aval (106).

4. Module (100) selon la revendication 1 ou 2, **caractérisé en ce qu'**il comprend au moins un moyen (114) d'amplification d'un signal d'interrogation reçu sur le moyen amont (102).

5. Circuit de communication avec une pluralité de capteurs (200), notamment avec les capteurs (200) d'un dispositif (300) de détection, en particulier de détection de fuite, ledit circuit de communication comprenant :
- un module (100) de communication selon l'une quelconque des revendications précédentes pour chaque capteur (200) de ladite pluralité de capteurs, et
- au moins un fil (216), dit de communication, prévu pour relier en série lesdits modules de communication (100).

6. Circuit selon la revendication 5, **caractérisé en ce qu'**il comprend en outre au moins un moyen (308) de terminaison, relié au fil de communication (216) en aval du dernier capteur (200ₙ).

7. Capteur (200) pour détecter un événement, tel qu'une fuite, ou pour mesurer une grandeur physique comprenant :
- au moins un moyen (208) senseur pour capter un événement ou une grandeur physique, et
- un module (100) de communication selon l'une quelconque des revendications 1 à 4.

8. Capteur (200) selon la revendication 7, **caractérisé en ce qu'**il comprend en outre au moins un module (204) électronique de gestion dudit au moins un moyen senseur (208), et le module de communication (100) est intégré dans le module de gestion (204).

9. Capteur (200) selon la revendication 8, **caractérisé en ce que** le moyen senseur (208) est agencé dans/autour d'un câble (202), dit de détection, ledit câble de détection (202) comprenant en outre au moins un fil (216) de communication, et au moins deux fils (214) d'alimentation du capteur (200), s'étendant sur toute la longueur dudit câble de détection (202).

10. Capteur (200) selon la revendication 9, **caractérisé en ce que** le câble de détection (202) comporte à une de ses extrémités le module électronique de gestion (204) et à l'autre de ses extrémités un module (206), dit de continuité, ledit module électronique de gestion (204), respectivement de continuité (206), étant prévu pour s'assembler avec un module électronique de continuité (206), respectivement de gestion (204), d'un autre capteur de sorte à réaliser :
- une connexion en série entre l'au moins un fil de communication (216) dudit capteur (200) et au moins un fil de communication dudit autre capteur, et
- une connexion, en série ou en parallèle, entre les fils d'alimentation (214) dudit capteur (200) et les fils d'alimentation dudit autre capteur.

11. Dispositif (300) de détection, en particulier de détection de fuite, comprenant :
- soit une pluralité de capteurs (200₁-200ₙ) selon l'une quelconque des revendications 7 à 10 reliés entre eux, en série, par au moins un fil de communication (216),
- soit une pluralité de capteurs et un circuit de communication selon l'une quelconque des revendications 5 ou 6 reliant en série lesdits capteurs ; et
- une unité de communication (304) pour interroger lesdits capteurs (200₁-200ₙ), et
- une unité d'alimentation (302).

12. Dispositif (300) selon la revendication 11, **caractérisé en ce qu'**il comprend en outre un dispositif (306), dit barrière, de limitation de puissance électrique disposé entre lesdites unités (302, 304) d'alimentation et de communication, et lesdits capteurs (200₁-200ₙ).

13. Procédé (400) de communication entre une unité de communication (304) et des capteurs (200₁-200ₙ) selon l'une quelconque des revendications 7 à 10, ladite unité de communication (304) et lesdits capteurs (200₁-200ₙ) étant disposés en série, ledit procédé comprenant une étape (402) d'émission d'un signal, dit d'interrogation, de ladite unité de communication (304) vers un moyen amont (102) du capteur (200₁), dit premier capteur, le plus proche de ladite unité de communication (304), et une itération d'une phase (404), dite d'interrogation, réalisée par chaque capteur (200ᵢ) à tour de rôle, en commençant par le premier capteur (200₁) et comprenant les étapes suivantes :
- émission (412), par ledit capteur (200ᵢ) à travers ledit moyen amont (102ᵢ) vers l'unité de communication (304), d'un signal de réponse audit signal d'interrogation,
- mise en court-circuit (418) dudit capteur (200ᵢ) de sorte que l'unité de communication (304) est reliée au moyen amont (102ᵢ₊₁) du prochain capteur (200ᵢ₊₁) sans passer par ledit capteur (200ᵢ).

14. Procédé (400) selon la revendication 13, **caractérisé en ce que** la phase d'interrogation (404) comprend en outre une étape (416) de réémission, par le capteur (200ᵢ), dudit signal d'interrogation vers le capteur suivant (200ᵢ₊₁), chacun des capteurs (200ᵢ) à part le premier capteur (200₁) recevant ainsi le signal d'interrogation du capteur précédent (200ᵢ₋₁).

## Patentansprüche

1. Kommunikationsmodul (100) für einen Sensor (200), das dazu vorgesehen ist, in einer Detektionsvorrichtung (300), insbesondere zur Detektion von Leckagen in explosiver Atmosphäre, verwendet zu werden, die mehrere Sensoren (200) umfasst, **dadurch gekennzeichnet, dass** es umfasst:
- mindestens ein sogenanntes vorgelagertes Mittel (102) zum Empfangen eines Abfragesignals von der dem Sensor vorgelagerten Seite und dessen Transportieren hin zu dem Sensor durch einen Kommunikationsport (104) und zum Empfangen eines Antwortsignals von dem Sensor durch den Kommunikationsport (104) und dessen Transportieren hin zur dem Sensor vorgelagerten Seite durch das vorgelagerte Mittel (102);
- mindestens ein sogenanntes nachgelagertes Mittel (106) zum Transportieren eines Abfragesignals hin zur dem Sensor nachgelagerten Seite,
- mindestens ein sogenanntes Kurzschlussmittel (110) des Sensors, das zwischen einer offenen Position, in der das vorgelagerte Mittel (102) mit dem Kommunikationsport (104) verbunden ist, und einer geschlossenen Position verlagerbar ist, in der das vorgelagerte Mittel (102) von dem Kommunikationsport (104) mit dem Sensor getrennt ist und mit dem nachgelagerten Mittel (106) verbunden ist,
- mindestens ein sogenanntes Steuermittel (112) zum Steuern des Kurzschlussmittels (110) und das im Kommunikationsmodul (100) eingerichtet ist;
das dazu ausgestaltet ist, das von dem Sensor gesendete Antwortsignal zu detektieren und die Position des Kurzschlussmittels (119) dementsprechend zu ändern, um:
- das Kurzschlussmittel (110) bis zur Sendung des Antwortsignals in der offenen Position zu halten, wodurch Folgendes ermöglicht wird:
- in einer ersten Kommunikationsrichtung, Empfangen (102) des Abfragesignals durch das vorgelagerte Mittel (102) und Senden des Abfragesignals an den Sensor durch den Kommunikationsport (104), und
- in der entgegengesetzten Richtung, Senden eines von dem Sensor durch den Kommunikationsport (104) als Antwort auf das Abfragesignal gelieferten Antwortsignals durch das vorgelagerte Mittel (102); und
- Anordnen des Kurzschlussmittels (100) in der geschlossenen Position nach dem Senden.

2. Kommunikationsmodul (100) für einen Sensor (200), das dazu vorgesehen ist, in einer Detektionsvorrichtung (300), insbesondere zur Detektion von Leckagen in explosiver Atmosphäre, verwendet zu werden, die mehrere Sensoren (200) umfasst, **dadurch gekennzeichnet, dass** es umfasst:
- mindestens ein sogenanntes vorgelagertes Mittel (102) zum Empfangen eines Abfragesignals von der dem Sensor vorgelagerten Seite und dessen Transportieren hin zu dem Sensor durch einen Kommunikationsport (104) und zum Empfangen eines Antwortsignals von dem Sensor durch den Kommunikationsport (104) und dessen Transportieren hin zur dem Sensor vorgelagerten Seite durch das vorgelagerte Mittel (102);
- mindestens ein sogenanntes nachgelagertes Mittel (106) zum Transportieren eines Abfragesignals hin zur dem Sensor nachgelagerten Seite,
- mindestens ein sogenanntes Kurzschlussmittel (110) des Sensors, das zwischen einer offenen Position, in der das vorgelagerte Mittel (102) mit dem Kommunikationsport (104) verbunden ist, und einer geschlossenen Position verlagerbar ist, in der das vorgelagerte Mittel (102) von dem Kommunikationsport (104) mit dem Sensor getrennt ist und mit dem nachgelagerten Mittel (106) verbunden ist,
- mindestens ein sogenanntes Steuermittel (112) zum Steuern des Kurzschlussmittels (110) und das im Kommunikationsmodul (100) eingerichtet ist;
das dazu ausgestaltet ist, das Abfragesignal zu detektieren, und zum:
- nach dem Empfang des Abfragesignals, durch einen Zeitgeber, Rückwärtszählen eines ersten Countdowns mit einer Dauer von länger oder gleich der Antwort des Sensors und somit Halten des Kurzschlussmittels (110) in der offenen Position bis zum Senden des Antwortsignals, wodurch Folgendes ermöglicht wird:
- in einer ersten Kommunikationsrichtung, Empfangen (102) des Abfragesignals durch das vorgelagerte Mittel (102) und Senden des Abfragesignals an den Sensor durch den Kommunikationsport (104),
und
- in der entgegengesetzten Richtung, Senden eines von dem Sensor durch den Kommunikationsport (104) als Antwort auf das Abfragesignal gelieferten Signals durch das vorgelagerte Mittel (102),
- nachdem der erste Countdown beendet wurde, Anordnen des Kurzschlussmittels (100) in der geschlossenen Position nach dem Senden und Rückwärtszählen eines zweiten Countdowns mit einer Dauer von länger oder gleich der Antwortdauer sämtlicher dem Kommunikationsmodul nachgelagert angeordneten Sensoren; und
nachdem der zweite Countdown beendet wurde, wird das zweite Kurzschlussmittel (119) erneut in der offenen Position angeordnet.

3. Modul (100) nach Anspruch 1 oder 2, **dadurch gekennzeichnet, dass** es ferner mindestens ein Verstärkermittel genanntes Mittel (108) zum Empfangen des auf dem vorgelagerten Mittel (102) empfangenen Abfragesignals und dessen Weitersenden auf dem nachgelagerten Mittel (106) umfasst.

4. Modul (100) nach Anspruch 1 oder 2, **dadurch gekennzeichnet, dass** es mindestens ein Mittel (114) zur Verstärkung eines auf dem vorgelagerten Mittel (102) empfangenen Abfragesignals umfasst.

5. Kommunikationsschaltung mit mehreren Sensoren (200), insbesondere mit den Sensoren (200) einer Detektionsvorrichtung (300), insbesondere zur Detektion von Leckagen, wobei die Kommunikationsschaltung umfasst:
- ein Kommunikationsmodul (100) nach einem der vorhergehenden Ansprüche für jeden Sensor (200) von den mehreren Sensoren, und
- mindestens einen sogenannten Kommunikationsdraht (216), der dazu vorgesehen ist, die Kommunikationsmodule (100) in Reihe zu schalten.

6. Schaltung nach Anspruch 5, **dadurch gekennzeichnet, dass** sie ferner mindestens ein Endpunktmittel (308) umfasst, das mit dem Kommunikationsdraht (216) dem letzten Sensor (200ₙ) nachgelagert verbunden ist.

7. Sensor (200) zum Detektieren eines Ereignisses, wie beispielsweise eines Lecks, oder zum Messen einer physikalischen Größe, der mindestens umfasst:
- mindestens ein Sensormittel (208) zum Erfassen eines Ereignisses oder einer physikalischen Größe, und
- ein Kommunikationsmodul (100) nach einem der Ansprüche 1 bis 4.

8. Sensor (200) nach Anspruch 7, **dadurch gekennzeichnet, dass** er ferner mindestens ein elektronisches Modul (204) zur Verwaltung des mindestens einen Sensormittels (208) umfasst und das Kommunikationsmodul (100) in das Verwaltungsmodul (204) integriert ist.

9. Sensor (200) nach Anspruch 8, **dadurch gekennzeichnet, dass** das Sensormittel (208) in/um ein/em sogenannten Detektionskabel (202) eingerichtet ist, wobei das Detektionskabel (202) ferner mindestens einen Kommunikationsdraht (216) und mindestens zwei Drähte (214) zur Versorgung des Sensors (200) umfasst, die sich über die gesamte Länge des Detektionskabels (202) erstrecken.

10. Sensor (200) nach Anspruch 9, **dadurch gekennzeichnet, dass** das Detektionskabel (202) an einem seiner Enden das elektronische Verwaltungsmodul (204) und an dem anderen seiner Enden ein sogenanntes Kontinuitätsmodul (206) umfasst, wobei das elektronische Verwaltungs- (204) beziehungsweise Kontinuitätsmodul (206) dazu vorgesehen ist, mit einem elektronischen Kontinuitäts-(206) beziehungsweise Verwaltungsmodul (204) eines anderen Sensors zusammengebaut zu werden, derart, dass Folgendes hergestellt wird:
- eine Reihenschaltung zwischen dem mindestens einen Kommunikationsdraht (216) des Sensors (200) und mindestens einem Kommunikationsdraht des anderen Sensors, und
- eine Reihen- oder Parallelschaltung zwischen den Versorgungsdrähten (214) des Sensors (200) und den Versorgungsdrähten des anderen Sensors.

11. Detektionsvorrichtung (300), insbesondere zur Detektion von Leckagen, das umfasst:
- entweder mehrere Sensoren (200₁-200ₙ) nach einem der Ansprüche 7 bis 10, die untereinander durch mindestens einen Kommunikationsdraht (216) in Reihe geschaltet sind,
- oder mehrere Sensoren und eine Kommunikationsschaltung nach einem der Ansprüche 5 oder 6, die die Sensoren in Reihe schalten; und
- eine Kommunikationseinheit (304) zum Abfragen der Sensoren (200₁-200ₙ), und
- eine Versorgungseinheit (302).

12. Vorrichtung (300) nach Anspruch 11, **dadurch gekennzeichnet, dass** sie ferner eine sogenannte Barrierevorrichtung (306) zur Begrenzung der elektrischen Leistung umfasst, die zwischen den Versorgungs- und Kommunikationseinheiten (302, 304) und den Sensoren (200₁-200ₙ) angeordnet ist.

13. Verfahren (400) zur Kommunikation zwischen einer Kommunikationseinheit (304) und Sensoren (200₁-200ₙ) nach einem der Ansprüche 7 bis 10, wobei die Kommunikationseinheit (304) und die Sensoren (200₁-200ₙ) in Reihe geschaltet sind, wobei das Verfahren einen Schritt (402) des Sendens eines sogenannten Abfragesignals von der Kommunikationseinheit (304) an ein vorgelagertes Mittel (102) des erster Sensor genannten Sensors (200₁), der am nächsten an der Kommunikationseinheit (304) liegt, und eine Iteration einer sogenannten Abfragephase (404) umfasst, die durch jeden Sensor (200ᵢ) der Reihe nach beginnend mit dem ersten Sensor (200₁) ausgeführt wird, und die folgenden Schritte umfasst:
- Senden (412), durch den Sensor (200ᵢ), durch das vorgelagerte Mittel (102ᵢ) an die Kommunikationseinheit (304), eines Antwortsignals auf das Abfragesignal,
- Kurzschließen (418) des Sensors (200ᵢ), derart dass die Kommunikationseinheit (304) unter Umgehung des Sensors (200ᵢ) mit dem vorgelagerten Mittel (102ᵢ₊₁) des nächsten Sensors (200ᵢ₊₁) verbunden ist.

14. Verfahren (400) nach Anspruch 13, **dadurch gekennzeichnet, dass** die Abfragephase (404) ferner einen Schritt (416) zum Weitersenden des Abfragesignals durch den Sensor (200ᵢ) an den folgenden Sensor (200ᵢ₊₁) umfasst, wobei jeder der Sensoren (200ᵢ) bis auf den ersten Sensor (200₁) so das Abfragesignal des vorhergehenden Sensors (200ᵢ₋₁) empfängt.

## Claims

1. A communication interface (100) for a sensor (200) provided to be used in a detection device (300), in particular for leakage detection in an explosive atmosphere, comprising a plurality of sensors (200), **characterized in that** it comprises:
- at least one means (102), called upstream means, configured for receiving an interrogation signal from upstream of said sensor and transporting it to the sensor by a communication port (104), and for receiving from said communication port (104) a response signal and transporting it to upstream of the sensor by said one upstream means (102);
- at least one means (106), called downstream means, configured for transporting an interrogation signal to the downstream of said sensor;
- at least one means (110), called sensor short-circuit means, displaceable between an open position in which the upstream means (102) is linked to said communication port (104), and a closed position in which the upstream means (102) is disconnected from said communication port (104) with the sensor and is connected to the downstream means (106);
- at least one means (112), called control means, configured for controlling said short-circuit means (110), and arranged within the communication interface (100); configured to detect the response signal emitted by the sensor and modify the position of said short-circuit means (110) consequently, to :
- maintain said short-circuit means (110) in the open position until the transmission of the response signal, thus allowing:
▪ in a first direction of communication, to receive (102) the interrogation signal by said upstream means (102) and transmit said interrogation signal to the sensor by said communication port (104); and
▪ in the opposite direction, to emit by the upstream means (102) a response signal provided by the sensor by said communication port (104) in response of said interrogation signal and,
- dispose said short-circuit means (110) in the closed position after said transmission.

2. A communication interface (100) for a sensor (200) provided to be used in a detection device (300), in particular for leakage detection in an explosive atmosphere, having a plurality of sensors (200), **characterized in that** it comprises:
- at least one means (102), called upstream means, configured for receiving an interrogation signal from upstream of said sensor and transporting it to the sensor by a communication port (104), and receiving from said communication port (104) a response signal and transporting it to upstream of the sensor by said one upstream means (102);
- at least one means (106), called downstream means, configured for transporting an interrogation signal to the downstream of said sensor;
- at least one means (110), called sensor short-circuit means, displaceable between an open position in which the upstream means (102) is linked to said communication port (104), and a closed position in which the upstream means (102) is disconnected from said communication port (104) with the sensor and is connected to the downstream means (106) ;
- at least one means (112), called control means, configured for controlling said short-circuit means (110), and arranged within the communication interface (100); configured to detect the information signal, and to :
- upon receipt of the interrogation signal, count down a first countdown per timer, of a period greater than or equal to the response of the sensor, and thus maintain said short-circuit means (110) in open position until the transmission of the response signal, thus allowing :
▪ in a first direction of communication, to receive (102) the interrogation signal by said upstream means (102) and transmit said interrogation signal to the sensor by said communication port (104); and
▪ in the opposite direction, to emit by the upstream means (102) a response signal provided by the sensor by said communication port (104) in response of said interrogation signal,
- upon the first countdown is finished, dispose said short-circuit means (110) in the closed position after said transmission and count down a second countdown, of a period greater than or equal to the response of the plurality sensors disposed in downstream of the communication interface and,
- upon the second countdown is finished, said short-circuit means (110) is disposed again in open position.

3. Communication interface (100) according to claim 1 or 2, **characterized in that** it also comprises at least one means (108), called repeater means, configured for receiving the interrogation signal received on the upstream means (102) and re-transmitting it on the downstream means (106).

4. Communication interface (100) according to claim 1 or 2, **characterized in that** it comprises at least one amplifier means (114) of an interrogation signal received on the upstream means (102).

5. Communication circuit with a plurality of sensors (200), in particular with the sensors (200) of a detection device (300), in particular for leakage detection, said communication circuit comprising:
- a communication interface (100) according to any one of the preceding claims for each sensor (200) of said plurality of sensors, and
- at least one wire (216), called communication wire, provided to link said communication interfaces (100) in series.

6. Communication circuit according to claim 5, **characterized in that** it also comprises at least one termination means (308), linked to the communication wire (216) downstream of the last sensor (200(n)).

7. Sensor (200) configured for detecting an event, such as a leakage, or for measuring a physical variable, comprising:
- at least one sensing bundle (208) configured for monitoring an event or a physical variable, and
- a communication interface (100) according to any one of claims 1 to 4.

8. Sensor (200) according to claim 7, **characterized in that** it also comprises at least one electronic management module (204) of said at least one sensing bundle (208) and the communication interface (100) is incorporated in theelectronic management module (204).

9. Sensor (200) according to claim 8, **characterized in that** the sensing bundle (208) is arranged in/around a cable (202), called detection cable, said detection cable (202) also comprising at least one communication wire (216), and at least two sensor supply wires (214) for supplying the sensor (200), extending over the entire length of said detection cable (202).

10. Sensor (200) according to of claim 9, **characterized in that** the detection cable (202) comprises at one end the electronic management module (204) and at the other end a module (206), called continuity module, said electronic management circuit (204), said continuity module (206) respectively, being provided in order to be assembled with an electronic continuity module (206), and a management module (204) respectively, of another sensor so as to produce:
- a connection in series between the at least one communication wire (216) of said sensor (200) and at least one communication wire of said other sensor, and
- a connection, in series or in parallel, between the supply wires (214) of said sensor (200) and the supply wires of said other sensor.

11. Detection device (300), in particular for leakage detection, comprising:
- either a plurality of sensors (200(1))-200(n)) according to any one of claims 7 to 10 linked together, in series, by at least one communication wire (216),
- either a plurality of sensors (200(1))-200(n)) and a communication module according to any one of claims 5 or 6 linking in series said sensors,
- a communication unit (304) for interrogating said sensors (200(1))-200(n)); and
- a power supply (302).

12. Detection device (300) according to claim 11, characterized it further comprises a device (306), called barrier device, provided for limitation of electric power, arranged between said power supply (302) and communication unit (304) and said sensors (200(1))-200(n)).

13. Method of communication (400) between a communication unit (304) and a plurality of sensors (200(1))-200(n)) according to any one of claims 7 to 10, said communication unit (304) and said sensors (200(1))-200(n)) being arranged in series, said method comprising a step of signal transmission (402), called interrogation signal, from said communication unit (304) to a upstream means (102) of sensor (200(1)), called first sensor, closest to said communication unit (304) and an iteration of a phase (404), called interrogation phase, carried out by each sensor (200(i)) in turn, commencing with the first sensor (200(1)) and comprising the following steps:
- transmission (412), by said sensor (200(i)) through said upstream means (102(i)) to the communication unit (304), of a response signal to said interrogation signal;
- short-circuiting (418) of said sensor (200(i)) so that the communication unit (304) is linked to the upstream means (102(i+1)) of the next sensor (200(i+1)) without passing through said sensor (200(i)).

14. Method of communication (400) according to claim 13, **characterized in that** the interrogation phase (404) also comprises a step of re-transmission (416), by the sensor (200(i)), of said interrogation signal to the next sensor (200(i+1)), each of sensors (200(i)) apart from the first sensor (200(i)) thus receiving the interrogation signal from the preceding sensor (200(i-1)).
